**Europäisches Patentamt**

**European Patent Office**

**Office européen des brevets**

(11) Veröffentlichungsnummer: **0 222 136**
A2

## (12) EUROPÄISCHE PATENTANMELDUNG

(21) Anmeldenummer: **86113589.5**

(22) Anmeldetag: **02.10.86**

(51) Int. Cl.⁴: **G 01 D 5/36**

(30) Priorität: **12.10.85 DE 3536466**

(43) Veröffentlichungstag der Anmeldung:
**20.05.87 Patentblatt 87/21**

(84) Benannte Vertragsstaaten:
**DE FR GB**

(71) Anmelder: **Bodenseewerk Gerätetechnik GmbH**
**Alte Nussdorfer Strasse 15 Postfach 1120**
**D-7770 Überlingen/Bodensee(DE)**

(72) Erfinder: **Jansen, Dirk, Dr.**
**Barbelgängle 27**
**D-7770 Überlingen(DE)**

(72) Erfinder: **Schmid, Günter**
**Rauensteinstrasse 124**
**D-7770 Überlingen(DE)**

(74) Vertreter: **Weisse, Jürgen, Dipl.-Phys. et al,**
**Patentanwälte Dipl.-Phys. Jürgen Weisse Dipl.-Chem. Dr.**
**Rudolf Wolgast Bökenbusch 41 Postfach 11 03 86**
**D-5620 Velbert 11 Langenberg(DE)**

(54) Nullimpulserzeuger zur Erzeugung eines Impulses bei Erreichen einer vorgegebenen Lage eines Trägers.

(57) Der Träger 10 ist eine drehbare Scheibe mit zwei Spuren 12 und 14. Die Spur 12 enthält eine gleichmäßige Teilung in Form eines radialen Strichgitters. Diese Teilung ist durch eine Maske 28 einer feststehenden Abtastplatte 20 und eine Lichtschranke abtastbar und bildet Teil eines inkrementalen Meßsystems. Zur Erzeugung eines Nullimpulses zur Rückstellung eines Zählers sind auf der zweiten Spur 14 Felder 16 und 18 mit unregelmäßigen Teilungen vorgesehen, die mit Masken 22 bzw. 26 der Abtastplatte 20 zusammenwirken. Die Spur 14 ist durch die Masken 22 und 26 hindurch optoelektronisch abtastbar. Feld 16 und Maske 22 ergeben bei Überdeckung eine positive Signalspitze, während Maske 26 und Feld 18 bei Überdeckung eine gegen null gehende Signalspitze erzeugen. Die Abtastsignale der optoelektronischen Abtastung werden zur Erzeugung des Nullimpulses gegeneinandergeschaltet.

Fig.1

EP 0 222 136 A2

0222136

## Nullimpulserzeuger zur Erzeugung eines Impulses bei Erreichen einer vorgegebenen Lage eines Trägers

Die Erfindung betrifft einen Nullimpulserzeuger zur Erzeugung eines Impulses bei Erreichen einer vorgegebenen Lage eines Trägers enthaltend

(a) ein erstes Feld auf dem Träger mit einem optoelektronisch abtastbaren, unregelmäßigen Muster,

(b) ein zweites Feld auf dem Träger mit einem optoelektronisch abtastbaren, unregelmäßigen Muster, das von dem Muster des ersten Feldes verschieden ist,

(c) eine erste Maske, relativ zu welcher das erste Feld beweglich ist,

(d) erste optoelektronische Abtastmittel, mittels welcher das erste Feld durch die erste Maske hindurch beobachtbar ist,

(e) wobei die erste Maske in der besagten vorgegebenen Lage eine maximale Übereinstimmung mit dem ersten Feld ergibt, derart, daß die optoelektronische Abtastung von erstem Feld und erster Maske durch die ersten optoelektronischen Abtastmittel eine positive Signalspitze als Ausgangssignal ergibt,

(f) eine zweite Maske, relativ zu welcher das zweite Feld beweglich ist,

(g) zweite optoelektronische Abtastmittel, mittels welcher das zweite Feld durch die zweite Maske hindurch beobachtbar ist,

(h) wobei die zweite Maske in der besagten vorgegebenen Lage eine minimale Übereinstimmung mit dem zweiten Feld ergibt, derart, daß die optoelektronische Abtastung von zweitem Feld und zweiter Maske durch die zweiten optoelektronischen Abtastmittel eine gegen null gehende Signalspitze als Ausgangssignal ergibt, und

(i) differenzbildende Mittel zur Bildung der Differenz der Ausgangssignale der ersten und der zweiten optoelektronischen Abtastmittel zur Erzeugung einer Signalspitze bei Erreichen der besagten vorgegebenen Lage.

Solche Nullimpulserzeuger dienen insbesondere zur Erzeugung eines Nullimpulses für inkrementale Meßsysteme, bei denen die Bewegung eines Trägers durch Abtasten einer Teilungsspur mit gleichmäßig angeordneten Marken in eine Impulsfolge umgesetzt wird und die Impulse der Impulsfolge gezählt werden. Der Träger kann beispielsweise eine drehbare Scheibe sein, welche die Spur mit den in gleichen Abständen angeordneten Marken längs ihres Umfanges aufweist. Der Nullimpuls liefert eine Referenz, von der aus die Impulse, die jeder einem Winkelinkrement entsprechen, gezählt werden.

Durch die DE-AS 25 40 412 ist ein inkrementales Meßsystem bekannt, bei welchem entlang einer Teilungsspur Nullimpulsmarken angebracht sind. Diese Nullimpulsmarken werden durch Abtastmittel abgetastet und erzeugen reproduzierbare Impulse. Die Nullimpulsmarken haben eine wohl definierte Lage zu der Teilung der Teilungsspur. Die von den Nullimpulsmarken erzeugten Impulse bewirken Steuervorgänge im elektronischen Zähler des Meßsystems.

Die Lage solcher Nullimpulsmarken soll sehr genau definiert sein. Es muß sich also um sehr feine Marken handeln, die beispielsweise mit einem entsprechend scharf gebündelten Lichtstrahl abgetastet werden. Der dabei erhaltene Lichtstrom ist naturgemäß gering. Das gleiche gilt für die Teilung der Teilungsspur und die Abtastung der darauf vorgesehenen Marken, die üblicherweise von Gitterstrichen gebildet werden.

Durch die DE-PS 876 162 ist eine photoelektrische Präzisionsvorrichtung für die Einstellung eines beweglichen Objekts in eine genau voraus bestimmte Lage bekannt, bei welcher eine Photozelle durch zwei gegeneinander bewegliche Gitter hindurch beleuchtet wird. Die Photozelle spricht dann darauf an, daß mehrere Gitterstriche des einen Gitters mit darüberliegenden Gitterstrichen des anderen Gitters zur Deckung kommen. Es ist dabei auch bekannt, als Marken Gruppen von Gitterstrichen vorzusehen, die in ungleichen Abständen voneinander angeordnet sind. Es werden hier also die einzelnen Punkte, in denen ein Signal erzeugt werden soll, nicht durch einzelne Marken definiert sondern durch das Zusammenfallen der Gitterstriche eines Gitters mit den Gitterstrichen des anderen Gitters, wobei ein breites Lichtbündel mit einem entsprechend großen Lichtstrom durch dieses Muster von Gitterstrichen auf die Photozelle gelangen kann.

Durch die DE-PS 29 52 106 ist eine lichtelektrische, inkrementale Längen- oder Winkelmeßeinrichtung bekannt, bei welcher ein mit einer gleichmäßigen Teilung versehener Träger auf einer zweiten Spur im Abstand voneinander zwei Felder mit unregelmäßigen Strichmustern enthält. Eine Abtastplatte enthält einmal eine der Teilungsspur entsprechende Teilung und zum anderen zwei Felder mit den Mustern des Trägers entsprechenden unregelmäßigen Strichmustern, die im gleichen Abstand angeordnet sind wie die beiden Felder auf dem Träger. In einer bestimmten Stellung des Trägers kommt das eine unregelmäßige Strichmuster des Trägers mit dem entsprechenden unregelmäßigen Strichmuster der Abtastplatte zur Deckung und das andere unregelmäßige Strichmuster des Trägers kommt gleichzeitig mit dem entsprechenden anderen Strichmuster der Abtastplatte zur Deckung. Die beiden Strichmuster der Abtastplatte werden durch je eine Lichtschranke beobachtet, so daß in dieser Stellung des Trägers parallel zwei photoelektrische Signale erzeugt werden. Diese Signale werden addiert. Auf diese Weise soll sichergestellt werden, daß bei Ausfall einer Lichtschranke immer noch eine einwandfreie Ansteuerung des Zählers erfolgt, durch welchen die Impulse von der Abtastung der regelmäßigen Teilung gezählt werden. Bei Überdeckung des einen Strichmusters des Trägers mit dem auf der gleichen Spur befindlichen anderen Strichmuster der Abtastplatte (oder umgekehrt) wird kein Impuls erzeugt, da die Strichmuster nicht zueinander passen.

Ein Impuls wird ja nur erzeugt, wenn jeder Strich des einen Musters mit einem entsprechenden Strich des anderen Musters vollständig zur Deckung kommt.

Bei der bekannten Anordnung werden in der besagten vorgegebenen Lage des Trägers zwei gleichsinnige Signalspitzen an den beiden Lichtschranken erzeugt, die additiv überlagert werden. Das muß entsprechend der dort vorgegebenen Aufgabenstellung auch so sein, denn die beiden Impulse sollen sich verstärken und bei Ausfall einer Lichtschranke gegenseitig ersetzen. Ein den Zähler steuernder Nullimpuls wird erzeugt, wenn die erhaltene Signalspitze einen vorgegebenen Schwellwert überschreitet. Ein solcher Schwellwert muß dort vorgesehen werden, um die Signale auf der Nullimpulsspur zu unterdrücken, die beim Durchgang "falscher" Muster des Trägers durch ein Muster der Abtastplatte auftreten. Durch die Notwendigkeit eines solchen Schwellwertes wird die Anordnung jedoch fremdlichtempfindlich. Auch die Helligkeit der Lampen der Lichtschranke und die Empfindlichkeit der photoelektrischen Detektoren der Lichtschranken müssen berücksichtigt werden.

Durch die DE-OS 32 25 756 ist eine Einrichtung zur Erzeugung eines Nullimpulses bei einer Codierscheibe bekannt, bei welcher in zwei Spuren einmal auf einem beweglichen Träger und auf einer Abtastplatte übereinstimmende Muster angebracht sind, die bei Überdeckung und optoelektronischer Abtastung eine positiv gerichtete Signalspitze hervorrufen, und zum anderen Muster, die bei Überdeckung und optoelektronischer Abtastung eine gegen null gerichtete Signalspitze erzeugen. Die Signale der optoelektronischen Abtastung werden gegeneinandergeschaltet, so daß eine verstärkte, durch null gehende Signalspitze erzeugt wird. Durch die Gegeneinanderschaltung der Signale der optoelektronischen Abtastung werden Fremdlichteinflüsse eliminiert, ebenso wie der Einfluß von Helligkeitsschwankungen der Lichtquellen bei der optoelektronischen Abtastung. Es handelt sich hier um Muster, die auf unterschiedlichen Spuren angeordnet sind. Die Notwendigkeit zusätzlicher Spuren führt jedoch zu einer Vergrößerung der Codierscheibe.

Bei der DE-PS 31 04 972 sind bei einer inkrementalen Meßeinrichtung zur Erzeugung eines Nullimpulses in einer Spur hintereinander zwei Marken mit einem unregelmäßigen Muster angebracht, die mittels entsprechender Masken abgetastet werden. Diese Marken sind untereinander gleich und erzeugen Signalspitzen gleicher Richtung. Um zu verhindern, daß dementsprechend zwei Referenzimpulse erzeugt werden, werden durch eine dritte Spur (Gegentaktspur) Referenzsignale mit Einbrüchen erzeugt. Nur in einer Stellung des abgetasteten Objekts fallen beide Signalspitzen mit einem Einbruch des Referenzsignals zusammen. In diesem Punkt übersteigen daher beide Signalspitzen das Referenzsignal. Die Auswerterschaltung addiert dann die beiden Signalspitzen zu einem starken Nullimpuls.

Es sind hier für den Nullimpuls ebenfalls zwei Spuren erforderlich wie bei der schon erörterten DE-OS 32 25 756.

Der Erfindung liegt die Aufgabe zugrunde, einen Nullimpulserzeuger zu schaffen, bei welchem für die Erzeugung des Nullimpulses nur eine einzige Spur erforderlich ist, so daß die Abmessungen des Trägers, insbesondere wenn dieser eine drehbare Scheibe ist, gering gehalten werden können, bei welchem aber andererseits Fremdlichteinflüsse eliminiert werden und auch keine Einstellung von Schaltschwellen in Abhängig von Änderungen der Empfindlichkeit der optoelektronischen Abtastung erforderlich ist.

Ausgehend von einem Nullimpulserzeuger der eingangs genannten Art wird diese Aufgabe dadurch gelöst, daß

(j) das erste und das zweite Feld auf dem Träger auf einer einzigen Spur in vorgegebenem Abstand angeordnet sind,

(k) die erste und die zweite Maske längs der besagten einzigen Spur in dem gleichen vorgegebenen Abstand wie das erste und das zweite Feld angeordnet sind.

Im Gegensatz zu einer Anordnung etwa nach der DE-PS 29 52 106 werden durch das eine Paar von Strichmustern in dem ersten Feld und der ersten Maske eine positive Signalspitze und durch das zweite Paar von Strichmustern in dem zweiten Feld und der zweiten Maske eine gegen null gehende Signalspitze erzeugt, wobei die Ausgangssignale der optoelektronischen Abtastung gegeneinandergeschaltet sind. Hierdurch wird der Einfluß von Fremdlicht eliminiert. Maßgebend für die Erzeugung des Nullimpulses ist der Nulldurchgang der erhaltenen resultierenden Signalspitze. Die Einstellung eines endlichen Schwellwerts kann entfallen. Im Gegensatz zu der Anordnung nach der DE-OS 32 25 756 sind jedoch die Muster in dem ersten und dem zweiten Feld bzw. die erste und die zweite Maske in einer einzigen Spur angeordnet, so daß die Abmessungen des Trägers entsprechend verringert werden können, was für einige Anwendungen wichtig ist.

Ein Ausführungsbeispiel der Erfindung ist nachstehend unter Bezugnahme auf die zugehörigen Zeichnungen näher erläutert:

Fig. 1 zeigt einen Träger mit zwei Spuren, von denen eine eine gleichmäßige Teilung in Form eines gleichmäßig geteilten Strichgitters enthält und die andere in Zusammenwirken mit einer Abtastplatte zur Erzeugung eines Nullimpulses bei einer vorgegebenen Stellung des Trägers eingerichtet ist.

Fig. 2 zeigt die Abtastplatte.

Fig. 3 veranschaulicht in schematischer Darstellung die optoelektronische Abtastung und die Signalverarbeitung.

Fig. 4 zeigt den Signalverlauf der optoelektronischen Abtastung der Spur für die Erzeugung des Nullimpulses durch die erste Maske hindurch.

Fig. 5 zeigt den Signalverlauf der optoelektronischen Abtastung der Spur für die Erzeugung des Nullimpulses durch die zweite Maske hindurch.

Fig. 6 zeigt die Differenz der Signale von Fig.4 und Fig.5.

Mit 10 ist eine Träger bezeichnet, der von einer drehbaren Scheibe gebildet ist. Die Scheibe ist auf ihrem äußeren Rand mit einer Teilungsspur 12 versehen, die mit regelmäßigen Teilungen in Form von radialen Gitterstrichen versehen ist. Diese Teilungsspur 12 bildet Teil eines inkrementalen Meßsystems: Jeder Gitterstrich der Teilungsspur entspricht einem bestimmten Winkelinkrement der Drehbewegung der Scheibe.

Auf dem Träger 10 ist radial einwärts von der Teilungsspur 12 eine weitere Spur 14 zur Erzeugung eines Nullimpulses bei Erreichen einer vorgegebenen Lage des Trägers 10 vorgesehen.

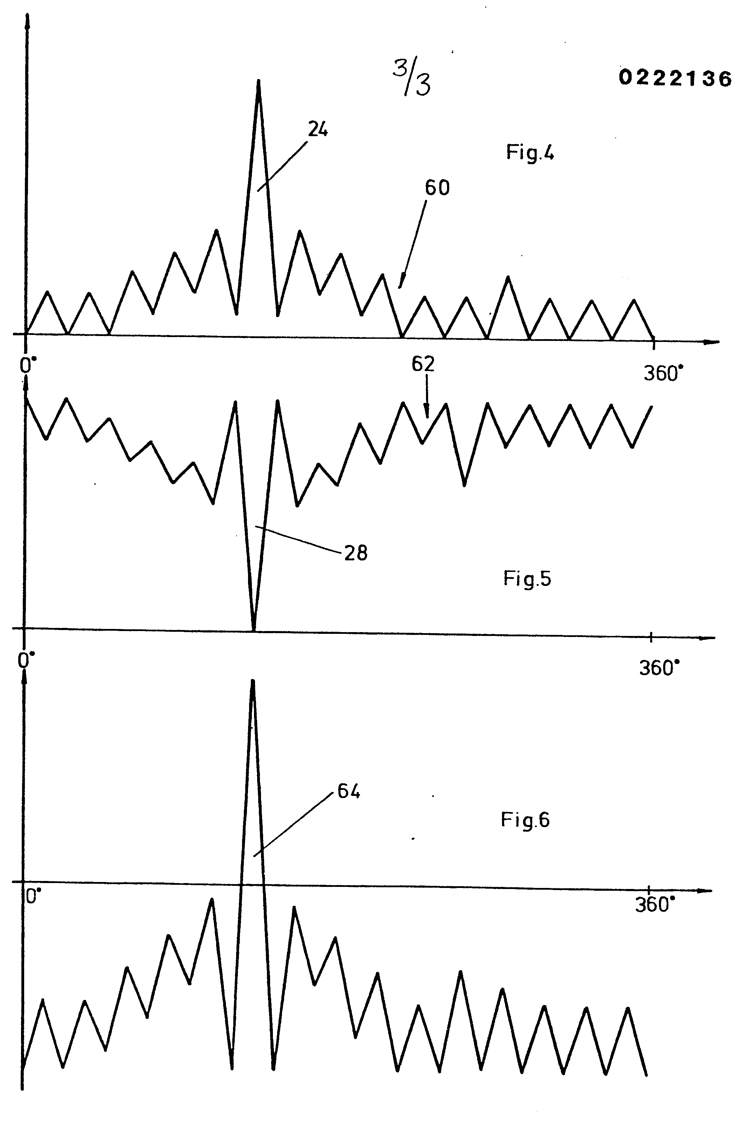

In der Spur 14 ist ein erstes Feld 16 mit einem optoelektronisch abtastbaren, unregelmäßigen Muster vorgesehen. Weiterhin ist auf der Spur 14 gegenüber dem ersten Feld winkelversetzt ein zweites optoelektronisch abtastbares, unregelmäßiges Muster 18 angebracht, das von dem Muster des ersten Feldes 16 verschieden ist. Auf einer Abtastplatte 20, relativ zu welcher der Träger 10 beweglich ist, ist eine erste Maske 22 angebracht, die in der besagten vorgegebenen Lage eine maximale Übereinstimmung mit dem ersten Feld 16 ergibt, derart, daß die optoelektronische Abtastung von erstem Feld 16 und erster Maske 22 durch (noch zu beschreibende) erste optoelektronische Abtastmittel eine positive Signalspitze 24 (Fig.4) als Ausgangssignal ergibt.

Die Abtastplatte 20 enthält weiterhin eine zweite Maske 26. Die zweite Maske 26 ergibt in der besagten vorgegebenen Lage eine minimale Übereinstimmung mit dem zweiten Feld 18, derart, daß die optoelektronische Abtastung von zweitem Feld 18 und zweiter Maske 26 durch (noch zu beschreibende) zweite optoelektronische Abtastmittel eine gegen null gehende Signalspitze 28 (Fig.5) als Ausgangssignal ergibt. Das erste und das zweite Feld 16 und 18 sind auf dem Träger 10 auf einer einzigen Spur 14 in vorgegebenem Abstand angeordnet. Die erste Maske 22 und die zweite Maske 26 sind längs der besagten Spur 14 in dem gleichen vorgegebenen Abstand wie das erste und das zweite Feld 16 bzw. 18 angeordnet. Diese Anordnung gestattet, wie gesagt, eine Verkleinerung des Trägers 10.

Die Abtastplatte 20 weist weiterhin eine Maske 28 auf, die eine gleichmäßige Teilung entsprechend der Teilung der Spur 12 bildet. Je nach der Stellung des Trägers 10 zu der Abtastplatte 20 kommen die lichtundurchlässigen Flächen der Maske 28 mit den lichtundurchlässigen Flächen der Gitterstriche der Spur 12 zur Deckung und entsprechend die lichtdurchlässigen Flächen der Maske 28 mit den lichtdurchlässigen Flächen der Spur 12. In diesem Falle ergibt sich eine maximale Durchlässigkeit und eine Signalspitze des Abtastsignals. Wenn der Träger 10 um ein Winkelinkrement weiterbewegt ist, kommen die lichtundurchlässigen Flächen der Maske 28 mit den lichtdurchlässigen Flächen der Spur 12 und die lichtdurchlässigen Flächen der Maske 28 mit den Gitterstrichen der Spur 12 zur Deckung, so daß sich eine minimale Durchlässigkeit ergibt. Die optoelektronische Abtastung ergibt dann ein Signalminimum. Bei der Drehung des Trägers 10 relativ zu der Abtastplatte 20 ergibt sich somit eine Folge von Signalspitzen oder Impulsen, von denen jeder einem Winkelinkrement der Drehbewegung entspricht.

Die Spur 12 wird durch optoelektronische Abtastmittel 30 in Form einer Lichtschranke abgetastet. Die Lichtschranke enthält eine Lichtquelle 32 und eine Kollimatorlinse 34, die ein paralleles Lichtbündel 36 erzeugt. Das Lichtbündel tritt durch die Maske 28 der Abtastplatte 20 und durch die Spur 12 mit dem radialen Strichgitter des Trägers 10. Das Lichtbündel 36 fällt dann auf einen photoelektrischen Empfänger 38 und erzeugt eine Impulsfolge, die einem Zähler 40 zugeführt wird. Der Zähler summiert die einzelnen Impulse, die je einem Winkelinkrement entsprechen, auf, so daß der Zählerstand ein Maß für die Lage des Trägers 10 darstellt. Da die gezählten Impulse jedoch nur Winkeländerungen darstellen, muß der Zähler durch einen Nullimpuls bei einer vorgegebenen Lage des Trägers 10, welche die Referenz für die zu messende Bewegung darstellt, auf einen vorgegebenen Wert, beispielsweise auf null gesetzt werden.

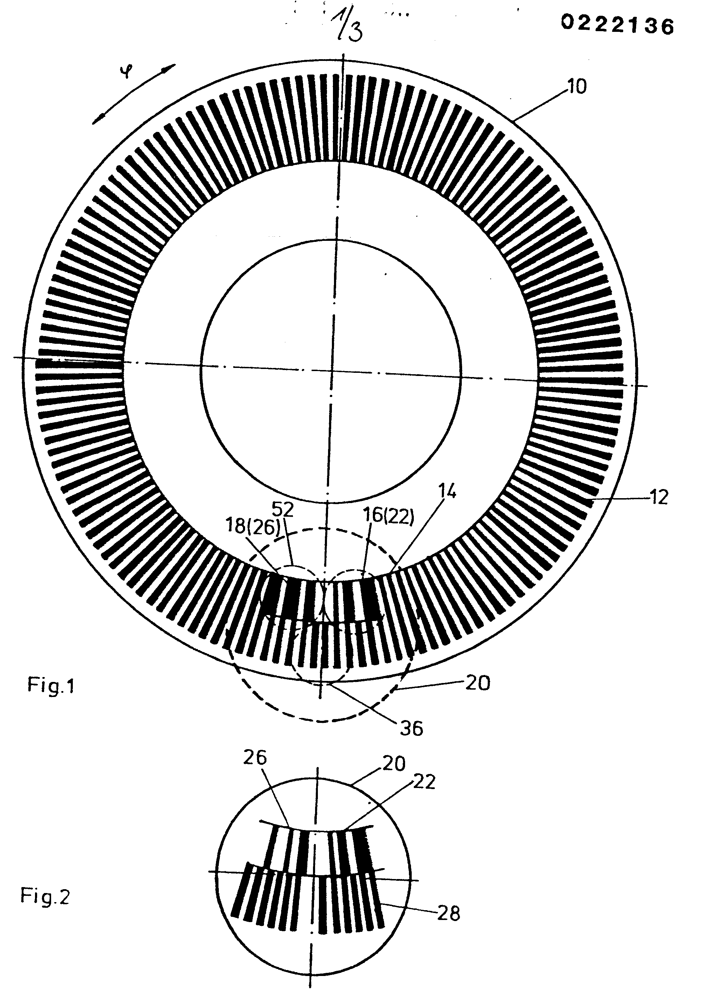

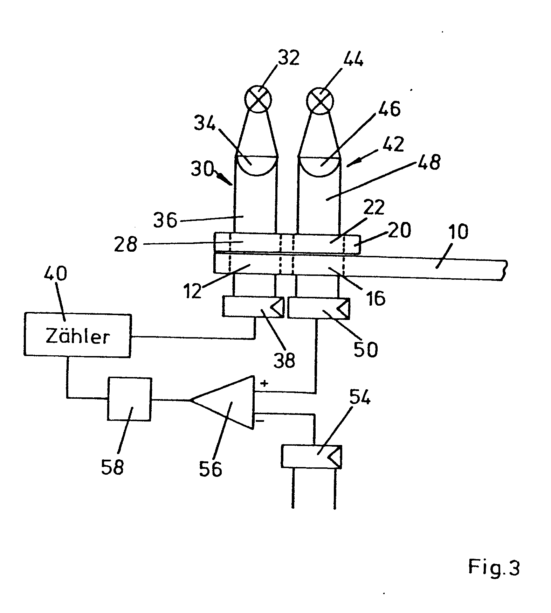

Zur Erzeugung dieses Nullimpulses in der besagten vorgegebenen Lage ist die Spur 14 mit den Feldern 16 und 18 vorgesehen. In der vorgegebenen Lage des Trägers 10 deckt sich das Feld 16 mit der Maske 22 der Abtastplatte 20. Es erfolgt eine optoelektronische Abtastung mittels einer Lichtschranke 42. Die Lichtschranke 42 besteht aus einer Lichtquelle 44, einer Kollimatorlinse 46, die ein paralleles Lichtbündel 48 erzeugt und einem photoelektrischen Detektor 50. Eine entsprechende (in Fig.3 hinter der Lichtschranke 42 angeordnete) Lichtschranke erzeugt ein Lichtbündel 52 (Fig.1), welches durch die Maske 26 der Abtastplatte 20 und in der vorgegebenen Stellung des Trägers 10 durch das zweite Feld 18 auf einen photoelektrischen Detektor 54 fällt.

Die Ausgangssignale der photoelektrischen Detektoren 50 und 54 sind auf einen Differenzverstärker 56 geschaltet, wobei also das Signal des photoelektrischen Detektors 54 invertiert wird. Der Differenzverstärker 56 liefert ein Ausgangssignal, wie es in Fig.6 dargestellt ist. Bei Nulldurchgang dieses Ausgangssignals wird durch einen Nulldetektor 58 ein Nullimpuls erzeugt, der den Zähler 40 jeweils auf null stellt.

Die zweite Maske 26 besitzt eine größere mittlere Durchlässigkeit als die erste Maske. Wenn sich die erste Maske 22 über die gleichmäßige Teilung der Spur 14 außerhalb der Felder 16 und 18 oder über das erste Feld bewegt, dann treten Signalspitzen 60 auf einem relativ niedrigen Signalniveau auf, wie in Fig.4 dargestellt ist. Aus diesen hebt sich die positive Signalspitze 24 bei Erreichen der vorgegebenen Lage und Deckung von erstem Feld 16 und erster Maske 22 ab. Wenn die zweite Maske sich über den gleichmäßig geteilten Abschnitt der Spur 14 außerhalb der Felder 16 und 18 oder über das erste Feld 16 bewegt, dann treten Signalspitzen 62 auf einem relativ hohen Niveau auf. Das ist in Fig.5 dargestellt. Von diesem hohen mittleren Niveau geht die Signalspitze 28 gegen null, wenn das zweite Feld 18 mit der zweiten Maske 26 zur Deckung kommt. Um eine möglichst ausgeprägte Signalspitze 28 zu erhalten, ist das Muster des zweiten Feldes 18 komplementär zu dem Muster der zweiten Maske 26. Dann geht der Lichtstrom des Lichtbündels 52 tatsächlich praktisch auf null zurück, wenn der Träger 10 die vorgegebene Lage erreicht.

Das Ergebnis der Differenzbildung durch den Differenzverstärker 56 ist in Fig.6 dargestellt. Das Signal bewegt sich mit aufeinanderfolgenden Signalspitzen auf einem negativen Niveau. Nur die durch Gegeneinanderschalten der Signalspitzen 24 und 28 entstandene Signalspitze 64 durchstößt die Nullinie. Hierdurch wird der Nullimpuls zur Nullstellung des Zählers 40 ausgelöst.

Es ist leicht einzusehen, daß durch die Differenzbildung der Einfluß von Fremdlicht eliminiert wird. Fremdlicht bewirkt eine Verschiebung beider Signalniveaus und hebt sich bei der Differenzbildung heraus. Eine Änderung der Lampenhelligkeit bewirkt eine Vergrößerung der Amplituden der verschiedenen Signalspitzen und gleichzeitig eine Vergrößerung des mittleren Signalniveaus an dem photoelektrischen Detektor 54; also eine Verschiebung der Signalspitzen in Fig.5 nach oben. Dadurch werden die Signalspitzen weiterhin sicher unterhalb der Nullinie in Fig.6 gehalten, und nur die entsprechend höhere Signalspitze 64 stößt durch die Nullinie hindurch. Es ist also keine helligkeitsabhängige Einstellung von Schwellwerten erforderlich.

<u>Patentansprüche</u>

1.  Nullimpulserzeuger zur Erzeugung eines Impulses bei Erreichen einer vorgegebenen Lage eines Trägers enthaltend

    (a)  ein erstes Feld (16) auf dem Träger (10) mit einem optoelektronisch abtastbaren, unregelmäßigen Muster,

    (b)  ein zweites Feld (18) auf dem Träger (10) mit einem optoelektronisch abtastbaren. unregelmäßigen Muster, das von dem Muster des ersten Feldes (16) verschieden ist,

    (c)  eine erste Maske (22), relativ zu welcher das erste Feld (16) beweglich ist,

    (d)  erste optoelektronische Abtastmittel (42), mittels welcher das erste Feld (16) durch die erste Maske (22) hindurch beobachtbar ist,

    (e)  wobei die erste Maske (22) in der besagten vorgegebenen Lage eine maximale Übereinstimmung mit dem ersten Feld (16) ergibt, derart, daß die optoelektronische Abtastung von erstem Feld (16) und erster Maske (22) durch die ersten optoelektronischen Abtastmittel (42) eine positive Signalspitze (24) als Ausgangssignal ergibt,

(f)  eine zweite Maske (26), relativ zu welcher das zweite Feld (18) beweglich ist,

(g)  zweite optoelektronische Abtastmittel (54), mittels welcher das zweite Feld (18) durch die zweite Maske (26) hindurch beobachtbar ist,

(h)  wobei die zweite Maske (26) in der besagten vorgegebenen Lage eine minimale Übereinstimmung mit dem zweiten Feld (18) ergibt, derart, daß die optoelektronische Abtastung von zweitem Feld (18) und zweiter Maske (26) durch die zweiten optoelektronischen Abtastmittel (54) eine gegen null gehende Signalspitze (28) als Ausgangssignal ergibt, und

(i)  differenzbildende Mittel (56) zur Bildung der Differenz der Ausgangssignale der ersten und der zweiten optoelektronischen Abtastmittel (42) zur Erzeugung einer Signalspitze (64) bei Erreichen der besagten vorgegebenen Lage,

dadurch gekennzeichnet, daß

(j)  das erste und das zweite Feld (16 bzw. 18) auf dem Träger (10) auf einer einzigen Spur (14) in vorgegebenem Abstand angeordnet sind,

(k)  die erste und die zweite Maske (22 bzw. 26) längs der besagten einzigen Spur (14) in dem gleichen vorgegebenen Abstand wie das erste und das zweite Feld (16 bzw. 18) angeordnet sind.

2. Nullimpulserzeuger nach Anspruch 1, dadurch gekennzeichnet, daß die zweite Maske (26) eine größere mittlere Durchlässigkeit besitzt als die erste.

3. Nullimpulserzeuger nach Anspruch 1 oder 2, dadurch gekennzeichnet, daß das Muster des zweiten Feldes (18) komplementär zu dem Muster der zweiten Maske (26) ist.

4. Nullimpulserzeuger nach Anspruch 2, dadurch gekennzeichnet, daß das Ausgangssignal der differenzbildenden Mittel (56) auf einen Impulserzeuger (58) geschaltet ist, durch welchen der Nullimpuls bei Durchgang der besagten Signalspitze (64) durch null erzeugbar ist.

5. Nullimpulserzeuger nach einem der Ansprüche 1 bis 4, dadurch gekennzeichnet, daß

   (a) der Träger (10) eine drehbare Scheibe ist, an welcher in einer Spur (14) gegeneinander winkelversetzt das erste und das zweite Feld (16 bzw. 18) vorgesehen sind, und

   (b) die Masken (22,26) in einer feststehenden, zu der Scheibe parallelen und in geringem Abstand von dieser angeordneten Abtastplatte (20) vorgesehen sind.

6. Nullimpulserzeuger nach Anspruch 5, dadurch gekennzeichnet, daß die Scheibe eine zusätzliche, mit regelmäßigen Teilungen versehene, optoelektronisch abtastbare Teilungsspur (12) eines inkrementalen Meßsystems aufweist.

7. Nullimpulserzeuger nach Anspruch 6, dadurch gekennzeichnet, daß die Abtastplatte (20) im Bereich der Teilungsspur (12) eine dritte Maske (28) mit einer regelmäßigen Teilung aufweist, die der Teilungsspur (12) entspricht.

0222136

Fig.1

Fig.2

Fig.3

3/3

0222136

Fig.4

Fig.5

Fig.6